(19) Europäisches Patentamt
European Patent Office
Office européen des brevets

(11) **EP 2 990 730 B1**

(12) **EUROPEAN PATENT SPECIFICATION**

(45) Date of publication and mention
of the grant of the patent:
**18.12.2019 Bulletin 2019/51**

(51) Int Cl.:
***F24C 7/08*** (2006.01)

(21) Application number: **15182531.2**

(22) Date of filing: **26.08.2015**

(54) **METHOD FOR CARRYING OUT A COOKING PROCESS**

VERFAHREN ZUR DURCHFÜHRUNG EINES KOCHPROZESSES

PROCÉDÉ PERMETTANT DE METTRE EN OEUVRE UN PROCESSUS DE CUISSON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.08.2014 DE 102014216999**

(43) Date of publication of application:
**02.03.2016 Bulletin 2016/09**

(73) Proprietor: **Convotherm Elektrogeräte GmbH
82436 Eglfing (DE)**

(72) Inventor: **Schilling, Michael
82380 Peißenberg (DE)**

(74) Representative: **Hoefer & Partner Patentanwälte
mbB
Pilgersheimer Straße 20
81543 München (DE)**

(56) References cited:
**EP-A1- 2 211 116         EP-A1- 2 363 646
DE-A1-102010 037 388   DE-U1-202006 009 284
DE-U1-202006 009 284   US-A1- 2009 274 802**

**Description**

The present invention relates to a method for carrying out a cooking process in accordance with claim 1.

EP 2 363 646 A1 discloses a method for carrying out a cooking process in a cooking space of a cooking appliance that separates the cooking products into a so-called "guiding-cooking product" and a "follow-up-cooking product" with the guide-cooking product being introduced first into the cooking chamber.

DE 20 2006 009 284 U1 discloses a cooking device that uses at least one parameter as a target-cooking product-status value of a cooking product being located in a treatment level of the cooking device.

DE 10 2010 037 388 A1 discloses a method for carrying out a cooking process using at least two parameters for a selected cooking product, with the first parameter characterizing the kind of cooking product and with the second parameter characterizing a risk that is specific for the respective cooking product. Each cooking chamber zone is, furthermore, characterized by a third parameter.

Further relevant background art is given in US 2009/274802 A1.

Investigations and tests carried out in the context of the invention have shown that in a cooking appliance, in particular a commercial cooking appliance, which is loaded with various products simultaneously and the associated cooking program initiated, because of the different product arrangements with different amounts that can respectively be combined with one another, the problem arises that the cooking times stored for the individual cooking programs or recipes are no longer optimally appropriate. This is due to the increased amount of cold cooking material introduced into the cooking space simultaneously. Further, the investigations carried out in the context of the invention have shown that it is not sufficient just to work on the basis of the total number of product trays loaded with cooking products and introduced into the cooking space, since the different amounts of product each have a greater or lesser effect on the total cooking times.

The results of these circumstances are:

- increased fall in temperature after loading;
- altered air movements in the cooking space; and
- altered humidity value in the cooking space.

The object of the present invention is therefore to provide a method for carrying out a cooking process by which it is possible to prevent influences which have a negative effect on the cooking result.

This object is achieved by the features of claim 1.

In this context, the present invention is based on the idea of optimising the cooking processes of individual different recipes or cooking programs at the simultaneous start of mixed loading of the cooking space of the cooking appliance with respectively variable amounts. The optimisation may take place before, during or at the start of the individually assembled product loading, and is thus not a compensation method for what is known as rolling loading, such as is disclosed in DE 10 2011 109 398 A1. In this document, "rolling loading" means that a new batch of foodstuffs to be cooked, such as a fully loaded cooking material carrier, is introduced into the cooking space of the cooking appliance, in which other previously loaded batches are still located for which the target cooking time has not yet been reached. For the purpose of achieving a constant, reproducible quality of the cooked foodstuffs, DE 10 2011 109 398 A1 proposes not increasing the cooking time as is conventional in the art, but instead temporarily increasing a specific power input as a function of the amount of foodstuffs located in the cooking space of the cooking appliance. In this context, "specific power input" refers to the energy input per unit time. This specific power input can be provided by increasing the cooking space temperature by an offset value, by increasing the humidity of the cooking atmosphere and/or by increasing the air circulation in the cooking space.

By contrast, the present invention assumes that a previously completely empty cooking space is loaded from the beginning with a combination of different foodstuffs, in different amounts and also on a different number of cooking product trays, and the cooking process is subsequently initiated for all foodstuffs simultaneously.

The necessary adaptation of the cooking process may take place by way of the time, temperature, humidity, air speed or other components characterising a cooking process. These components may include a percentage extra for opening the cooking space door when removing the cooking products, a percentage extra for the positioning of the trays and for the amount of cooking products arranged on the trays. In the case of a percentage extra for opening the cooking space door, this becomes smaller the further the cooking process has progressed. The core temperature of the cooked products can be used as a switch-off criterion. The adaptations may follow fixed and/or variable rules in this context.

By the definition of DE 10 2011 109 38, the foodstuffs or cooking products to be prepared by the method according to the invention may be "identical or similar foodstuffs", meaning foodstuffs which can be cooked simultaneously and together in the same cooking space atmosphere, in other words in particular at the same temperature and the same humidity.

According to the invention, however, it is also conceivable for foodstuffs or cooking products which are prepared in different cooking space atmospheres to be able to be prepared by the method according to the invention, whilst observing particular upper and lower limits. One example is a foodstuff or cooking product which can be prepared for example at a cooking temperature of 200 °C in dry air, but with which other foodstuffs or coking products match which have for example 180 °C as a lower limit and 220 °C as an upper limit for the cooking temperature, thus observing a tolerance range of ± 20 °C. It is also possible to use an average of cooking parameters in cooking methods for cooking products which are to be prepared in different cooking space atmospheres.

If for example the individual cooking times of the individual recipes/cooking programs are to be adapted for the adaptation according to the invention, the following formula is used:

Product 1 old cooking time = T1old
Product 1 new cooking time = T1new
Product 2 cooking time = T2
Product 3 cooking time = T3
Number of loaded trays of product 1 = CoT1
Number of loaded trays of product 2 = CoT2
Number of loaded trays of product 3 = CoT3
"Mixed loading" optimisation value, for example in %, = $T_{opt}$
"Number of trays" optimisation value, for example in %, = Tt

$$\text{T1new} = \text{T1old} + (\text{T1old} * \text{Tt} * (\text{CoT1} - 1)) + (\text{T2} * T_{opt} * \text{CoT2}) + (\text{T3} * T_{opt} * \text{CoT3}))$$

The value of $T_{opt}$ can be defined as an appliance constant, as a fixed/variable/dynamic value and/or specifically for each cooking product or recipe/cooking program. In this context, prioritisation may be provided, by way of which the cooking appliance detects which value $T_{opt}$ is to be used for a cooking process which is to be carried out.

The adaptation can in an example not forming part of the present invention also take place by way of an alteration to the cooking space climate (in particular the humidity) or an alteration to the fan rotational speed and/or the direction of rotation of the fan and the cooking temperature or other relevant components, as was described above.

The dependent claims contain advantageous developments of the invention.

Further details, features and advantages of the invention may be taken from the following description of an embodiment with reference to the drawings.

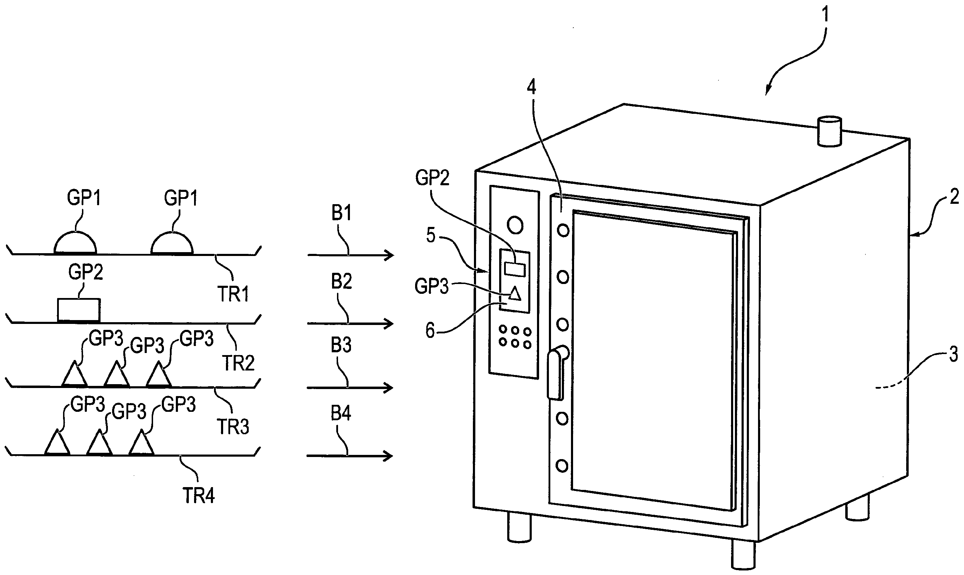

To illustrate the method according to the invention and the cooking appliance according to the invention, the single drawing provides a simplified representation thereof together with a simplified representation of product trays with cooking products arranged thereon.

The drawing shows a cooking appliance 1 which comprises a housing 2 in which a cooking space 3 is arranged. The cooking space 3 can be opened and closed using a cooking space door 4.

A heating device (not shown in the drawing) is arranged in the cooking space 3, as well as a fan wheel, which can bring about movements of either dry air or humid air depending on the cooking process to be carried out.

The cooking appliance 1 is in particular a commercial cooking appliance, such as a hot-air steamer.

The cooking appliance 1 further comprises an operating device 5 which comprises a display device 6. Naturally, all of the other electrical and electronic components and other additional components of cooking appliances of this type are also provided.

The drawing further shows, purely by way of example, four product trays TR1, TR2, TR3 and TR4, which may also be referred to as cooking material carriers.

In the example situation, two cooking products GP1 are arranged on product tray TR1, one cooking product GP2 on product tray TR2, and three cooking products GP3 on each of product trays TR3 and TR4. As stated, the arrangement and number of the cooking products and the product trays is purely exemplary and may vary between applications.

The arrows B1 to B4 represent the loading of the product trays TR1 to TR4 into the cooking space 3 of the cooking appliance 1, after the cooking products GP1 to GP3 have been arranged on the product trays TR1 to TR4.

The cooking appliance 1 according to the invention may optionally have a function comprising automated allocated of cooking products, which takes place and is displayed fully automatically after selecting a cooking product, as is disclosed in EP 1 798 479 B2. This is represented in the drawing by the display device 6 with the display for the cooking products GP2 and GP3. In this example situation, as the first cooking product the operator finds the cooking product GP1 and inputs it into the device control system 5, which subsequently automatically selects the cooking products GP2 and GP3 and displays them to the operator as products which match the cooking product GP1 and which may thus be referred to as "identical or similar cooking products" in accordance with the explanations in the introduction, since they match one another in terms of cooking because of the cooking processes thereof o the associated cooking space atmospheres.

In a situation of this type, the cooking products GP1 to GP3 are prepared using a cooking process in which for example the cooking space temperature and the cooking space humidity are the same for all of the products GP1 to GP3. Nevertheless, because of differences in amount and constitution between the cooking products GP1 to GP3, and because of the number of products trays TR1 to TR4 introduced into the cooking space 3, there would be an influence on the cooking process, and without any adaptation to the cooking parameters, in the example situation the cooking time, this would lead to unsatisfactory cooking results.

In this example situation, the cooking appliance 1 would automatically carry out the aforementioned calculation of new cooking times T1new, T2new and T3new, taking into account the original or old cooking times T1old, T2old and T3old as well as the number of product trays (in the example situation one tray TR1, one tray TR2 and two trays TR3, TR4) using the stated formula.

After the respective calculations are carried out, in which for example an optimisation value $T_T$ for the parameter of the number of product trays TR1 to TR4 would be set at for example 5 %, which thus represents a fixed, pre-set optimisation value in the example situation, whilst the variable optimisation value $T_{opt}$ found in the formula is also calculated or determined depending on the product type and amount and may for example be 3 %.

After the calculations are carried out, three new times T1new, T2new and T3new for the cooking products GP1 to GP3 will be provided, after which times the cooking products GP1 to GP3 are prepared in the desired manner and to the desired quality.

However, as is also stated above, it would also be possible to combine cooking products with one another which are not "identical or similar foodstuffs" within the above definition, but which actually differ from one another in the cooking processes or cooking parameters thereof. In this case, a calculation of at least one of the cooking parameters explained above is also carried out, the products being in particular tolerance ranges as regards the cooking parameters thereof so as to be able to achieve the desired cooking results.

Thus, in an example not forming part of the invention, to carry out the method; one of the cooking products, such as the cooking product GP1 in the example situation shown, is initially selected, for example as desired by a customer, and arranged on the product TR1 in the desired number (in the example situation two GP1).

Subsequently, the remaining product trays TR2, TR3 and TR4 are loaded with the cooking products GP2 and GP3 and the product trays TR1 to TR4 loaded in this manner are arranged in the cooking space together before the respective cooking process is initiated.

The optimisation of the cooking process according to the method according to the invention takes place before, during or at the start of the cooking process. In this context, at least one updated cooking parameter is determined, such as the updated cooking times T1new, T2new and T3new of the respectively associated cooking products GP1, GP2 and GP3 in the example situation. This takes place as a function of the number of introduced product trays and of base cooking parameters, such as the cooking times T1old, T2old and T3old in the example situation, and of the described optimisation values $T_t$ and $T_{opt}$ for determining an adapted cooking process to be carried out.

To carry out the cooking process, it is initiated simultaneously for all of the introduced cooking process GP1 to GP3, which are removed from the cooking space 3 again after the cooking process is finished.

Subsequently, the appliance settings are reset manually or automatically, in such a way that for a subsequent cooking process, in some cases with different cooking products, the original conditions are provided again in the cooking space or in the cooking space regulation.

According to the invention, in this context it is conceivable for all of the fully cooked cooking products GP1 to GP3 to be removed from the cooking space 3 simultaneously or in succession, depending on when the cooking times have passed, if the updated parameter, as stated by way of example above, is the cooking time.

However, as stated above, parameters for optimising the cooking process may also in examples not forming part of the invention be the cooking temperature, the cooking temperature climate (in particular the cooking space humidity) or the fan rotational speed and/or the direction of rotation of the fan as well as other conceivable components.

As a further particularly preferred embodiment, it is possible for the display device 6 to display the updated cooking time, if this is the optimised parameter, after the optimisation, so as to be able to signal to the operator when the cooking process will be complete.

Within the stated tolerance ranges for cooking products having different cooking parameters from one another, it is also possible to keep the cooking time at the original value or to exceeded it at least only to a relatively small extent, in which case other cooking parameters affecting the cooking process are optimised for this purpose. This would be conceivable, to mention just one example, for foodstuffs such as chicken breast, chicken legs and chicken wings, for which the cooking temperature and cooking space climate are in such narrow tolerance ranges that the cooking time could be kept the same by influencing them.

In addition to the above written disclosure, reference is hereby explicitly made to the representation of the invention in the drawing.

List of reference numerals

| | | |
|---|---|---|
| 1 | Cooking appliance |
| 2 | Housing |
| 3 | Cooking space |
| 4 | Cooking space door |
| 5 | Operating device |
| 6 | Display device |
| GP1-GP3 | Cooking products |
| TR1-TR4 | Product trays |
| B1-B4 | Loading arrows |

**Claims**

1. Method for carrying out a cooking process in a cooking space (3) of a cooking appliance (1), comprising the following method steps:

   - simultaneously introducing a plurality of different cooking products (GP1-GP3) arranged on product trays (TR1-TR4) and having associated base cooking parameters (T1old-T3old) into the previously completely empty cooking space (3);
   - determining at least one updated cooking parameter (T1new-T3new) of each cooking product (GP1, GP2 and GP3) introduced into the cooking space (3) as a function of

$$T1_{new} = T1_{old} + (T1_{old} * T_t * (CoT1 - 1)) + (T2 * T_{opt} * CoT2) + (T3 * T_{opt} * CoT3)), \P$$

   the factors of this formula being the following:

   Product 1 old cooking time = $T1_{old}$
   Product 1 new cooking time = $T1_{new}$
   Product 2 cooking time = T2
   Product 3 cooking time = T3
   Number of loaded trays of product 1 = CoT1
   Number of loaded trays of product 2 = CoT2
   Number of loaded trays of product 3 = CoT3
   "Mixed loading" optimisation value, for example in %, = $T_{opt}$
   "Number of trays" optimisation value, for example in %, = $T_t$, Wherein the value of $T_{opt}$ can be defined as an appliance constant, as a fixed/variable/dynamic value and/or specifically for each cooking product or recipe/cooking program,

   - initiating the optimised cooking process simultaneously for all introduced cooking products (GP1-GP3); and
   - removing the fully cooked cooking products (GP1-GP3) from the cooking space (3).

2. Method according to claim 1, **characterised in that** the fully cooked cooking products (GP1-GP3) are removed from the cooking space (3) simultaneously.

3. Method according to claim 1, **characterised in that** the fully cooked cooking products (GP1-GP3) are removed from the cooking space (3) in succession.

4. Method according to any of claims 1 to 3, **characterised in that** the optimisation value ($T_{opt}$) which can be determined individually is calculated or set.

5. Method according to any of claims 1 to 4, **characterised in that** after a first cooking product (GP1) is selected the cooking appliance automatically selects and displays cooking products (GP2, GP3) matching the first cooking product (GP1).

**6.** Method according to any of claims 1 to 5, **characterised in that** after the selected cooking parameter is optimised the optimisation value is displayed.

**7.** Method according to any of claims 1 to 6, **characterised in that** the selected cooking products (GP1-GP3) have the same base cooking parameters apart from the cooking time.

**8.** Method according to any of claims 1 to 6, **characterised in that** the selected cooking products (GP1-GP3) have different base cooking parameters.

**Patentansprüche**

**1.** Verfahren zum Durchführen eines Garvorgangs in einem Garraum (3) eines Gargeräts (1), das folgende Verfahrensschritte umfasst:

- gleichzeitiges Einbringen einer Vielzahl von auf Produktschalen (TR1-TR4) angeordneten unterschiedlichen Garprodukten (GP1-GP3) mit zugehörigen Basis-Garparametern (T1old-T3old) in den zuvor vollständig leeren Garraum (3);
- Ermitteln zumindest eines aktualisierten Garparameters (T1neu-T3neu) für jedes in den Garraum (3) eingebrachte Gargut (GP1, GP2 und GP3) als Funktion von:

$$T1neu = T1alt + (T1alt * Tt * (CoT1 - 1)) + (T2 * T\,opt * CoT2) + (T3 * Topt * CoT3)),$$

wobei die Faktoren dieser Formel die folgenden sind:

Produkt 1 alte Garzeit = T1old
Produkt 1 neue Garzeit = T1 neu
Produkt 2 Garzeit = T2
Produkt 3 Garzeit = T3
Anzahl der eingebrachten Schalen von Produkt 1 = CoT1
Anzahl der eingebrachten Schalen von Produkt 2 = CoT2
Anzahl der eingebrachten Schalen von Produkt 3 = CoT3
Optimierungswert "Mischbeladung", z. B. in %, = Topt
Optimierungswert "Anzahl Schalen", z. B. in %, = Tt, wobei der Wert Topt als Gerätekonstante, als fester/variabler/dynamischer Wert und/oder spezifisch für jedes Garprodukt oder Rezept/Garprogramm, definierbar ist,

- gleichzeitiges Initiieren des optimierten Garprozesses für alle eingeführten Garprodukte (GP1-GP3); und
- Entfernen der fertig gekochten Garprodukte (GP1-GP3) aus dem Garraum (3).

**2.** Verfahren nach Anspruch 1, **dadurch gekennzeichnet, dass** die fertig gegarten Produkte (GP1-GP3) gleichzeitig aus dem Garraum (3) entnommen werden.

**3.** Verfahren nach Anspruch 1, **dadurch gekennzeichnet, dass** die fertig gekochten Garprodukte (GP1-GP3) nacheinander aus dem Garraum (3) entnommen werden.

**4.** Verfahren nach einem der Ansprüche 1 bis 3, **dadurch gekennzeichnet, dass** der individuell bestimmbare Optimierungswert (Topt) berechnet oder eingestellt wird.

**5.** Verfahren nach einem der Ansprüche 1 bis 4, **dadurch gekennzeichnet, dass** das Gargerät nach Auswahl eines ersten Garprodukts (GP1) automatisch zum ersten Garprodukt (GP1) passende Garprodukte (GP2, GP3) auswählt und anzeigt.

**6.** Verfahren nach einem der Ansprüche 1 bis 5, **dadurch gekennzeichnet, dass** nach Optimierung des gewählten Garparameters der Optimierungswert angezeigt wird.

7. Verfahren nach einem der Ansprüche 1 bis 6, **dadurch gekennzeichnet, dass** die ausgewählten Garprodukte (GP1-GP3) abgesehen von der Garzeit die gleichen Basisgarparameter aufweisen.

8. Verfahren nach einem der Ansprüche 1 bis 6, **dadurch gekennzeichnet, dass** die ausgewählten Garprodukte (GP1-GP3) unterschiedliche Basisgarparameter aufweisen.

**Revendications**

1. Procédé pour réaliser un processus de cuisson dans un espace de cuisson (3) d'un appareil de cuisson (1), comprenant les étapes de procédé suivantes :

   - introduire simultanément une pluralité de différents produits de cuisson (GP1-GP3) agencés sur des plateaux de produits (TR1-TR4) et ayant des paramètres de cuisson de base associés (T1old-T3old) dans l'espace de cuisson précédemment complètement vide (3) ;
   - déterminer au moins un paramètre de cuisson mis à jour (T1 new-T3new) de chaque produit de cuisson (GP1, GP2 et GP3) introduit dans l'espace de cuisson (3) en fonction de

$$T1_{new} = T1_{old} + (T1_{old} * T_t * (CoT1-1)) + (T2 * T_{opt} * CoT2) + (T3 * T_{opt} * CoT3)),$$

   les facteurs de cette formule étant les suivants :

   Ancien temps de cuisson du produit 1 = $T1_{old}$
   Nouveau temps de cuisson du produit 1 = $T1_{new}$
   Temps de cuisson du produit 2 = T2
   Temps de cuisson du produit 3 = T3
   Nombre de plateaux chargés du produit 1 = CoT1
   Nombre de plateaux chargés du produit 2 = CoT2
   Nombre de plateaux chargés du produit 3 = CoT3
   Valeur d'optimisation du « chargement en commun », par exemple en%, = $T_{opt}$
   Valeur d'optimisation du « nombre de plateaux », par exemple en%, = $T_{t'}$, où la valeur de $T_{opt}$ peut être définie en tant que constante d'appareil, en tant que valeur fixe/variable/dynamique et/ou spécifiquement pour chaque produit de cuisson ou recette/programme de cuisson,

   - déclencher le processus de cuisson optimisé simultanément pour tous les produits de cuisson introduits (GP1-GP3) ; et
   - retirer les produits de cuisson entièrement cuits (GP1-GP3) de l'espace de cuisson (3).

2. Procédé selon la revendication 1, **caractérisé en ce que** les produits de cuisson entièrement cuits (GP1-GP3) sont retirés simultanément de l'espace de cuisson (3).

3. Procédé selon la revendication 1, **caractérisé en ce que** les produits de cuisson entièrement cuits (GP1-GP3) sont retirés successivement de l'espace de cuisson (3).

4. Procédé selon l'une des revendications 1 à 3, **caractérisé en ce que** la valeur d'optimisation ($T_{opt}$) qui peut être déterminée individuellement est calculée ou définie.

5. Procédé selon l'une des revendications 1 à 4, **caractérisé en ce qu'**après la sélection d'un premier produit de cuisson (GP1), l'appareil de cuisson sélectionne et affiche automatiquement les produits de cuisson (GP2, GP3) correspondant au premier produit de cuisson (GP1).

6. Procédé selon l'une des revendications 1 à 5, **caractérisé en ce qu'**après l'optimisation du paramètre de cuisson sélectionné, la valeur d'optimisation est affichée.

7. Procédé selon l'une des revendications 1 à 6, **caractérisé en ce que** les produits de cuisson sélectionnés (GP1-GP3) ont les mêmes paramètres de cuisson de base à l'exception du temps de cuisson.

**8.** Procédé selon l'une des revendications 1 à 6, **caractérisé en ce que** les produits de cuisson sélectionnés (GP1-GP3) ont différents paramètres de cuisson de base.

EP 2 990 730 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2363646 A1
- DE 202006009284 U1
- DE 102010037388 A1
- US 2009274802 A1
- DE 102011109398 A1
- DE 10201110938
- EP 1798479 B2